# EUROPEAN PATENT SPECIFICATION

(11) **EP 0 598 121 B1**
(45) Date of publication and mention of the grant of the patent: **20.08.1997**
(21) Application number: 92911235.7
(22) Date of filing: 12.06.1992
(51) Int. Cl.: F16D 48/06

(54) **DEVICE FOR INTERRUPTING A POWERTRANSMISSION IN AN AUTOMOBILE**
VORRICHTUNG FÜR DIE UNTERBRECHUNG EINER KRAFTÜBERTRAGUNG IN EINEM KRAFTFAHRZEUG
DISPOSITIF POUR INTERROMPRE LA TRANSMISSION DE FORCE DANS UNE AUTOMOBILE

(43) Date of publication of application: 25.05.1994
(73) Proprietor: KABUSHIKI KAISHA YUNIKURA, Nagoya-shi, Aichi-ken 494 (JP)
(72) Inventor: IWATA, Shoichi, Kabushiki Kaisha Yunikura, Nagoya-shi, Aichi-ken 494 (JP); KATO, Shigeki, Kabushiki Kaisha Yunikura, Nagoya-shi, Aichi-ken 494 (JP); NAKANISHI, Kazumasa, Kabushiki Kaisha Yunikura, Nagoya-shi, Aichi-ken 494 (JP); KITADA, Masami, Kabushiki Kaisha Yunikura, Nagoya-shi, Aichi-ken 494 (JP)
(74) Representative: Low, Peter John
(86) International application number: JP9200755
(87) International publication number: WO9325825

(56) References cited:
- GB-A- 2 055 496
- JP-A-57 200 691
- JP-U-59 126 715
- JP-Y- 1 028 345
- US-A- 4 697 091

## Description

### BACKGROUND OF THE INVENTION

### Field of the Invention:

This invention relates to a power separating apparatus in an automobile, and more particularly to an apparatus for separating a rotated device rotated by engine power which is transmitted through a driving belt and an electromagnetic clutch, from the driving belt when the rotated device is failed in rotating.

### Description of the Prior Art:

A rotated device in an automobile such as a compressor for air conditioning system, a hydraulic pump or a generator is rotated by engine power transmitted through power transmission means including a driving belt and an electromagnetic clutch.

In the automobile, however, excessive load is applied to the power transmission means when the rotated device is failed in rotating. This results in destroying the power transmission means. In particular, if a plurality of the rotated devices are connected with a single driving belt, the damaged driving belt causes other rotated devices connected with the driving belt to stop.

To solve the problem set forth above, an apparatus has been proposed to separate a rotated device from a driving belt by removing an electromagnetic clutch mounted corresponding to the rotation device when a ratio of speed of the engine to that of the rotated device becomes a predetermined value.

In the separating apparatus known per se, it is determined whether or not the rotated device has failed, on the basis of the ratio of the speed of the engine to that of the rotated device. Thus, complicated detecting means is required for detecting each speed of the engine and the rotated device and for processing the detected signal. Further, the ratio of the speed of the engine to that of the rotated device is varied according to kinds of the engine and the rotated device, types of the engine and the rotated device, displacement of the engine or the like. Therefore, a failure remedy apparatus should be prepared for each combination of the engine and each rotated device.

The closest prior art document in relation to this application is considered to be U.S. 4,697,091. This document describes a device for detecting when a driven apparatus has frozen and/or its prime mover coupling mechanism is slipping. This is done by comparing the detected signal from a voltage generating alternator and comparing it with a reference speed signal, which is set at a slightly lower speed than the idling speed of the prime mover. Slippage is therefore presumed when the detected speed is lower than the reference speed signal. When this occurs disengagement of the apparatus from the prime mover is carried out in order to prevent any damage occurring.

### SUMMARY OF THE INVENTION

It is an object of the present invention to provide a power separating apparatus in an automobile, which can serve without complicated detecting means and is not restricted by any combination of an engine and a rotated device.

According to the present invention, there is provided a power separating apparatus in an automobile for separating a rotated device rotated by an engine through a driving belt for transmitting said engine power to said rotated device transmitted through a driving belt and an electromagnetic clutch connected to said driving belt and said rotated device, comprising:
first detecting means for generating a first electric signal having a predetermined voltage level when said engine is actuated and said rotated device should be actuated;
second detecting means for generating a second electric signal having a predetermined voltage level when said rotated device is not actuated and said rotated device should be actuated;
determining means for generating a failure signal indicating a failure of said rotated device depending upon a condition of logical product of said first electric signal and said second electric signal when said rotated device should be actuated; and
means for controlling said electromagnetic clutch to separate said rotated device from said driving belt on the basis of said failure signal.

In a preferred embodiment an electric potential adjusting circuit is coupled between first and second detectors and the determination circuit.

In a preferred embodiment the determination circuit is actuated only when the electromagnetic clutch should engage the drive belt and the rotated device.

In a preferred embodiment the control means includes a circuit for shutting off exciting current applied to the electromagnetic clutch on the basis of the failure signal.

In a preferred embodiment the power separating apparatus further includes a delay circuit coupled to the determination circuit to delay the determination circuit for a period of time after exciting current is applied to the electromagnetic clutch.

When the engine and the rotated device are normally rotated, the second electric signal is not outputted from the second detecting means while the first electric signal is outputted from the first detecting means. As a result, no failure signal is outputted from the determining means.

On the other hand, if the rotated device stops though the engine is normally rotated and the rotated device should be actuated, the first and second detecting means output the first and second electric signals, respectively. Accordingly, the failure signal can be outputted from the determining means. As a result, the operation of the electromagnetic clutch is stopped and the rotated device which is stopped, can be separated from the driving belt.

### BRIEF DESCRIPTION OF THE DRAWING

The foregoing and other objects and features of the invention will become apparent from the following description of a preferred embodiment of the invention with reference to the accompanying drawing, in which:

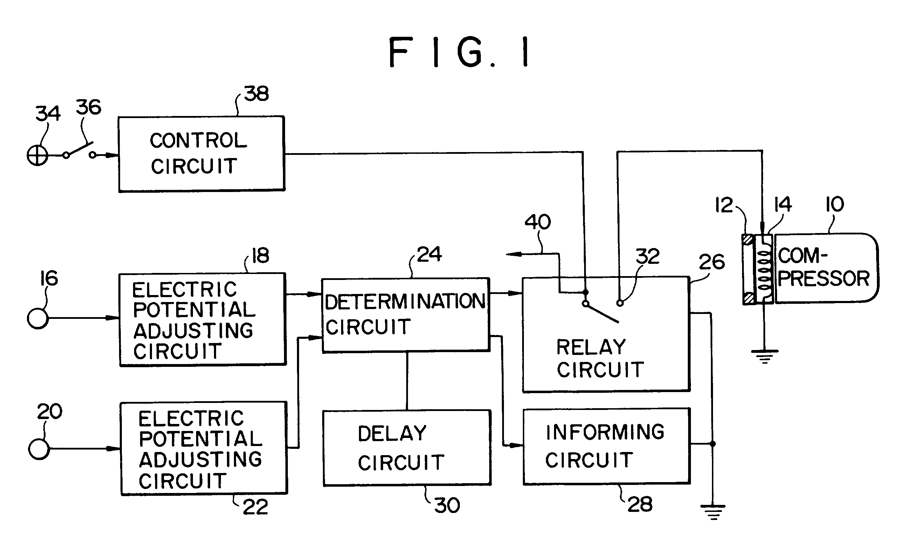

Fig. 1 is a block diagram of an electric circuit illustrating an embodiment of a separating apparatus according to the present invention.

### DETAILED DESCRIPTION OF THE PREFERRED EMBODIMENT

Referring now to Fig. 1, a compressor 10 for air conditioning system is shown as a rotated device. The compressor 10 is rotated by an engine (not shown) through an endless driving belt 12 and an electromagnetic clutch 14.

In a failure remedy apparatus, a first electric potential adjusting circuit 18 receives an output signal from a first detector 16 for detecting the normal operation of the engine (not shown). Additionally, a second electric potential adjusting circuit 22 receives an output signal from a second detector 20 for detecting the interruption of the compressor 10.

The first detector 16 is a circuit to output a detected signal having different voltage levels depending upon whether the engine is normally operated or stops. As the first detector 16, use is made of a detector which has been already mounted on an automobile, such as a generator and an engine oil pressure switch. In this case, the output voltage of the generator or the terminal voltage of the switch may serve as the output signal of the first detector 16.

The second detector 20 is a circuit to output a detected signal having different voltage levels depending upon whether the compressor 10 stops or is rotated. For example, if the rotated device is the compressor for air conditioning system, as the second detector 20, use is made of a rotation detecting sensor for detecting that an electromagnetic clutch, a rotating shaft, an internal moving body or the like is rotated, and a discharged gas pulse pressure sensor for detecting a pressure of discharged gas.

The first and second electric potential adjusting circuits 18, 22 adjust voltage levels of the output signals of the corresponding detectors, respectively. Therefore, the first and second electric potential adjusting circuits 18 and 22 are respectively provided with means for manually adjusting the voltage level as in the case of a variable resistor. The output signals of the first and second electric potential adjusting circuits 18 and 22 are supplied to a determination circuit 24.

Among the signals supplied from the first and second electric potential adjusting circuit 18 and 22, the determination circuit 24 defines a signal having such a voltage level that the engine is normally actuated, as a first electric signal. Further, the determination circuit 24 defines a signal having such a voltage level that the compressor 10 is not rotated, as a second electric signal. Then, the determination circuit 24 collates the logical product of both the electric signals and outputs a failure signal to a relay circuit 26 and an informing circuit 28 when meeting the condition of the logical product.

The determination operation in the determination circuit 24 is interrupted by a delay circuit 30 connected to the determination circuit 24 until a certain period of time is elapsed after the exciting current is supplied to the electromagnetic clutch 14. As a result, it is possible to prevent a malfunction from occurring at the beginning of the operation of the compressor 10.

The relay circuit 26 includes a normally-closed contact 32. The normally-closed contact 32 is arranged on a feed line serving for the exciting current which is supplied from a battery 34 to the electromagnetic clutch 14 through a switch 36 and a control circuit 38.

The battery 34 is used as a power source for the electric potential adjusting circuits 18, 22, the determination circuit 24, the relay circuit 26, the informing circuit 28 and the delay circuit 30. Accordingly, these circuits receive the power of the battery 34 through an electric supply line 40. As a result, the electric potential adjusting circuits 18, 22, the determination circuit 24, the relay circuit 26, the informing circuit 28 and the delay circuit 30 are actuated only when the compressor 10 should be actuated.

When the switch 36 is opened, the compressor 10 is separated from the driving belt 12 by the electromagnetic clutch 14, and the electric potential adjusting circuits 18, 22, the determination circuit 24, the relay circuit 26, the informing circuit 28 and the delay circuit 30 are then not in operating state.

When the switch 36 is closed, the exciting current is applied to the electromagnetic clutch 14 so that the compressor 10 is connected with the driving belt 12, and is rotated. Simultaneously, the electric potential adjusting circuits 18, 22, the determination circuit 24, the relay circuit 26, the informing circuit 28 and the delay circuit 30 are in operating state.

When the engine and the compressor 10 are normally rotated, the second electric signal is not outputted from the second electric potential adjusting circuit 22 while the first electric signal is outputted from the first electric potential adjusting circuit 18. Therefore, no failure signal is outputted from the determination circuit 24.

On the other hand, in case where the compressor 10 stops although the engine is normally rotated when the electric potential adjusting circuits 18, 22, the determination circuit 24, the relay circuit 26, the informing circuit 28 and the delay circuit 30 are actuated, i.e., when the compressor 10 should be actuated, the first and second electric potential adjusting circuits 18 and 20 output the first and second electric signals, respectively. As a result, the determination circuit 24 output the failure signal.

Therefore, the normally-closed contact 32 of the relay circuit 26 is opened so that the exciting current is not applied to the electromagnetic circuit 26. As a result, the compressor 10 is separated from the driving belt 12. Further, the informing circuit 28 is actuated so as to inform on a failure of the compressor 10 by means of a buzzer, an indicating lamp or the like, for example.

The sound of the buzzer or the lightning of the indicating lamp informs a driver in the automobile of an abnormality of the compressor.

## Claims

1. A power separating apparatus in an automobile for separating a rotated device (10) rotated by an engine through a driving belt (12) for transmitting said engine power to said rotated device (10) transmitted through a driving belt (12) and an electromagnetic clutch (14) connected to said driving belt (12) and said rotated device (10), comprising:
first detecting means (16,18) for generating a first electric signal having a predetermined voltage level when said engine is actuated and said rotated device (10) should be actuated;
second detecting means (20,22) for generating a second electric signal having a predetermined voltage level when said rotated device (10) is not actuated and said rotated device (10) should be actuated;
determining means (24,30) for generating a failure signal indicating a failure of said rotated device (10) depending upon a condition of logical product of said first electric signal and said second electric signal when said rotated device (10) should be actuated; and
means (26,38)for controlling said electromagnetic clutch to separate said rotated device (10) from said driving belt (12) on the basis of said failure signal.

2. The power separating apparatus of claim 1 further including an electric potential adjusting circuit (22) coupled between the first and second detectors (16) and (20) and the determination circuit (24).

3. The power separating apparatus of claim 1 wherein the determination circuit (24) is activated only when the electromagnetic clutch (14) should engage the drive belt (12) and the rotated device.

4. The power separating apparatus of claim 1 wherein the control means includes a circuit for shutting off exciting current applied to the electromagnetic clutch (14) on the basis of the failure signal.

5. The power separating apparatus of claim 1 further including a delay circuit (30) coupled to the determination circuit (24) to delay the determination circuit (24) for a period of time after exciting current is applied to the electromagnetic clutch (14).

## Patentansprüche

1. Vorrichtung zur Unterbrechung der Kraftübertragung in einem Kraftfahrzeug zum Separieren einer gedrehten Einrichtung (10), die durch eine Maschine über einen Treibriemen (12) gedreht wird, um die Maschinenleistung auf die gedrehte Einrichtung (10) über den Treibriemen (12) zu übertragen, die durch den Treibriemen (12) und eine elektromagnetische Kupplung (14) übertragen wird, die mit dem Treibriemen (12) und der gedrehten Einrichtung (10) verbunden ist, umfassend
erste Detektionsmittel (16, 18) zum Erzeugen eines ersten elektrischen Signals, das einen vorbestimmten Spannungspegel besitzt, wenn die Maschine läuft und die gedrehte Einrichtung (10) in Tätigkeit sein sollte,
zweite Detektionsmittel (20, 22) zum Erzeugen eines zweiten elektrischen Signals, das einen vorbestimmten Spannungspegel besitzt, wenn die gedrehte Einrichtung (10) nicht in Tätigkeit ist und in Tätigkeit sein sollte,
Bestimmungsmittel (24, 30) zum Erzeugen eines Fehlersignals, das einen Fehler der gedrehten Einrichtung (10) abhängig von dem logischen Produkt des ersten und zweiten elektrischen Signals anzeigt, wenn die gedrehte Einrichtung (10) in Tätigkeit sein sollte,
Mittel (26, 38) zum Steuern der elektromagnetischen Kupplung zum Separieren der gedrehten Einrichtung (10) von dem Treibriemen (12) aufgrund des Fehlersignals.

2. Vorrichtung zur Unterbrechung der Kraftübertragung nach Anspruch 1, weiter einen Schaltkreis (22) zum Einstellen eines elektrischen Potentials umfassend, der zwischen dem ersten und zweiten Detektor (16) und (20) und dem Bestimmungskreis (24) eingeschaltet ist.

3. Vorrichtung zur Unterbrechung der Kraftübertragung nach Anspruch 1, wobei der Bestimmungskreis (24) nur aktiviert ist, wenn die elektromagnetische Kupplung (14) mit dem Treibriemen (12) und der gedrehten Einrichtung in Eingriff sein sollte.

4. Vorrichtung zur Unterbrechung der Kraftübertragung nach Anspruch 1, wobei die Mittel zum Steuern einen Schaltkreis zum Abschalten des existierenden Stroms auf der Basis des Fehlersignals umfassen, der an die elektromagnetische Kupplung (14) angelegt ist.

5. Vorrichtung zur Unterbrechung der Kraftübertragung nach Anspruch 1, weiter einen Verzögerungskreis (30) einschließend, der mit dem Bestimmungskreis (24) gekoppelt ist, um den Bestimmungskreis (24) für eine Zeitperiode nach Anlegen des Erregerstroms an die elektromagnetische Kupplung (14) zu verzögern.

## Revendications

1. Dispositif d'interruption de transmission de puissance dans un véhicule automobile, destiné à séparer un dispositif rotatif (10) entraîné en rotation par un moteur via une courroie d'entraînement (12) transmettant ladite puissance de moteur audit dispositif rotatif (10), transmise via la courroie d'entraînement (12), et un embrayage électromagnétique (14) relié à ladite courroie d'entraînement (12) et audit dispositif rotatif (10), comprenant :
des premiers moyens de détection (16, 18) pour reproduire un premier signal électrique ayant un niveau de tension prédéterminé lorsque ledit moteur est actionné et que ledit dispositif rotatif (10) doit être actionné ;
des seconds moyens de détection (20, 22) pour reproduire un deuxième signal électrique ayant un niveau de tension prédéterminé lorsque ledit dispositif rotatif (10) n'est pas actionné et que ledit dispositif rotatif (10) doit être actionné ;
des moyens de détermination (24, 30) pour reproduire un signal de défaillance indiquant une défaillance dudit dispositif rotatif (10) d'après un état d'un produit logique dudit premier signal électrique et dudit deuxième signal électrique, lorsque ledit dispositif rotatif (10) doit être entraîné en rotation ; et
des moyens (26, 38) pour commander ledit embrayage électromagnétique afin de séparer ledit dispositif rotatif (10) de ladite courroie d'entraînement (12), d'après ledit signal de défaillance.

2. Dispositif d'interruption de transmission de puissance selon la revendication 1, comprenant en outre un circuit de réglage de potentiel électrique (22) couplé entre les premiers et deuxièmes détecteurs (16) et (20) et le circuit de détermination (24).

3. Dispositif d'interruption de transmission de puissance selon la revendication 1, dans lequel le circuit de détermination (24) est activé seulement lorsque l'embrayage électromagnétique (14) doit venir en prise contre la courroie d'entraînement (12) et le dispositif rotatif.

4. Dispositif d'interruption de transmission de puissance selon la revendication 1, dans lequel le moyen de commande comprend un circuit pour interrompre l'application d'un courant d'excitation à l'embrayage électromagnétique (14), d'après le signal de défaillance.

5. Dispositif d'interruption de transmission de puissance selon la revendication 1, comprenant en outre un circuit de retard (30) couplé au circuit de détermination (24) afin de retarder le circuit de détermination (24) pendant une période de temps suivant l'application d'un courant d'excitation à l'embrayage électromagnétique (14).
